# EUROPEAN PATENT APPLICATION

(11) **EP 3 340 069 A1**
(43) Date of publication of application: **27.06.2018**
(21) Application number: 16206566.8
(22) Date of filing: 23.12.2016
(51) Int. Cl.: G06F 17/27, G06F 17/30, G06Q 50/00

(54) **AUTOMATED CHARACTERIZATION OF SCRIPTED NARRATIVES**

(71) Applicant: ScriptBook NV, 2000 Antwerpen (BE)
(72) Inventor: Azermai, Nadira, 9160 Lokeren (BE)
(74) Representative: IP HILLS NV

(57) **Abstract**

According to an embodiment, a computer implemented method is disclosed for automated classification of a scripted narrative (100) comprising the following steps: parsing (110) the scripted narrative further into a parsed scripted narrative (101) comprising narrative elements and character elements; and, from the parsed scripted narrative, determining narrative factors (102) comprising a topical factor indicative for a content of the scripted narrative, a character factor indicative for a property of a character in the scripted narrative, a novelty factor indicative for a uniqueness with respect to other scripted narratives; and, by a trained classifier, predict (112) a level of success (103) of the scripted narrative (100) based on the narrative factors (102).

## Description

### Field of the Invention

The present invention generally relates to the field of statistical classification of scripted narratives.

A scripted narrative or narrative script is used to embody the scripted narrative into a narrative. Next to the narrative itself, a scripted narrative comprises further elements about the narrative, e.g. scene descriptions, character directives, structural elements such as indentations, font elements and headings to indicate the structure of the narrative rather than the story. A narrative resulting from a scripted narrative may for example relate to a screenplay, a TV series or program, a theatre play, a commercial or videogames.

More particular, the invention relates to the automated prediction of the success that a narrative will have based on a scripted narrative.

### Background of the Invention

Film or TV producers are typically flooded by scripted narratives from which they have to elect one or a few scripts that will be produced into a narrative such as a film. All these scripts have to be manually evaluated, i.e., a person has to read the script and assess whether a narrative based on the script will be successful. Success can be objectively measured according to the type of success that is sought. Success may be a commercial success that is measured by the revenue generated by the narrative such as for example by the box office revenue, amount of tickets sold, revenue from advertisements and the amount of viewers. Success may also be a critical success measured as the amount of appreciation of the narrative by a certain group of people such as for example reviewer ratings, viewer ratings, film critics, viewer pols, prizes and awards.

In the digital era, natural language processing or shortly NLP algorithms have become reality, enabling supervised or unsupervised statistical classification and interpretation of text for different purposes and applications. This new technology has also found its way to the field of scripted narrative and more particular to the evaluation of scripted narratives on their potential success.

In US2014/0324758A1 a predictive model is proposed that takes sub-document units such as paragraphs as input and automatically predicts an anticipated audience response. The predictive model is incorporated into a text processing application such that a writer is directly presented with feedback on the audience response when writing.

In US2009/248399 a method for scoring of text by utilizing emotional intelligence-based factors is disclosed. Text quality is scored based upon character development, rhythm, per-page quality, gaps, and climaxes, among other factors. The scores are further standardized by subtracting the population mean from an individual raw score and then dividing the difference by the population standard deviation.

### Summary of the Invention

A problem with the above solution is that none of them provide a fully automated or complete flow for predicting the success of a scripted narrative. Either manual interaction with a user is needed or the solution is not applicable to a full scripted narrative.

It is an object of the present invention to overcome the above shortcomings and to provide in a solution for fully automated prediction of the success of a scripted narrative.

According to a first aspect of the invention, this object is achieved by a computer implemented method for automated classification of a scripted narrative comprising the following steps:
- parsing the scripted narrative further into a parsed scripted narrative comprising narrative elements and character elements; and
- from the parsed scripted narrative, determining narrative factors comprising:
   o a topical factor indicative for a content of the scripted narrative; and
   o a character factor indicative for a property of a character in the scripted narrative; and
   o a novelty factor indicative for a uniqueness with respect to other scripted narratives; and
- by a trained classifier, predict a level of success of the scripted narrative based on the narrative factors.

The level of success is thus predicted by a trained classifier, for example by supervised machine learning of a statistical classifier based on the success and narrative factors of previous narratives. The trained classifier does not receive directly the scripted narrative as input but a set of narrative factors, i.e., the topical, character and novelty factors. By these factors, a normalized view of the narrative is obtained allowing the classifier to treat any scripted narrative according to the same set of parameters. In isolation, these factors are not strongly correlated to the predicted success. However, when considered together, the prediction results are accurate. The different narrative factors are further determined in an automated way from the narrative elements. Again, according to embodiments of the invention, statistical classifiers may be used to perform the determination of the narrative factors.

The narrative factors are derived from narrative elements and character elements. Narrative elements are for example scenes or paragraphs further composed of other narrative elements such as one or more dialogues, actions and scene descriptions. Character elements are an identification of the characters in the scripted narrative and may further be related to the narrative elements in the parsed scripted narrative. Preferably, the parsing is also performed by a statistical classifier and more preferably by a conditional random field model (CRF), Hidden Markov Model (HMM) or a recurrent neural network.

The advantage of this three-level approach, i.e., parsing a scripted narrative into narrative and character elements, determining therefrom narrative factors and predicting therefrom the level of success, is that a fully automated prediction is obtained starting from an electronic version of the scripted narrative. It is thus an advantage that scripted narratives can be classified according to their potential success level without any human intervention, allowing a more economic and efficient selection procedure of scripted narratives. Moreover, the specific choice of the narrative factors results in a solution that is implementable in an automated way and that leads to an higher prediction accuracy than existing solutions.

According to an embodiment determining the novelty factor further comprises:
- calculating a vector from the parsed scripted narrative by a linear regression model trained to approximate the vector from training vectors; and wherein a training vector encodes user information for an existing narrative; and
- determining the novelty factor as a similarity between the calculated vector and one or more other vectors.

The linear regression model is thus trained to calculate a vector that represents the scripted narrative in a multi-dimensional space wherein similar scripted narratives are positioned closer together in this multi-dimensional space. This similarity is encoded within a set of training vectors that encodes user information for an existing narrative, for example which users have watched a certain film or read a certain book. From such user information, similarity between narratives is inferred. The training data may then be labelled by a similarity measure in order to train the model to derive the vectors from unlabelled scripted narratives. By keeping a data store of vectors calculated from other scripted narratives and/or narratives an objective measure is obtained of the similarity between the scripted narratives and the narratives from the data store. The similarity may for example be expressed by the shortest distance or smallest angle between the vector and the stored vectors.

It is an advantage that an objective measure is obtained for the novelty of the scripted narrative by the representation of the scripted narrative as a single vector.

Advantageously, the linear regression model is determined according to the following steps:
- obtaining a training set comprising a set of users, a set of narratives and watching information indicative for whether a respective user from the set of users has watched a respective narrative from the set of narratives; and
- approximating the watching information by determining a set of user vectors for the set of users and a set of narrative vectors for the set of narratives such that approximated watching information is derivable from the set of narrative vectors and the set of user vectors; and
- obtain a subset of scripted narratives for a subset of the set of narratives; and
- training the linear regression model to determine the narrative vectors of the subset of narratives from the subset of scripted narratives.

In other words, the regression model is not trained directly based on labelling of scripted narratives, but indirectly based on a large set of watching information. In a first step, the watching information is approximated by a combination of a representation of a user as a vector and a representation of a play as a vector. This combination may example be a matrix product. In other words, all user vectors and play vectors are determined such that the combination of each user vector with a play vector corresponds to an approximated value of the watching information. The obtained play vectors or a subset of them are then used as label to train the regression model to derive a play vector from a scripted narrative.

It is an advantage that this way a measure of a similarity is obtained that is based on the similarity of previous plays resulting from scripted narratives. In other words, the novelty factor will indicate the novelty of the resulting play rather than the novelty of the scripted narrative.

According to an embodiment, the topical factor is determined by:
- grouping the narrative elements into scenes; and
- calculating word counts for the scenes; and
- adding to the word count of a respective scene a weighted word count from neighbouring scenes; and
- determining, for each scene, from the scene and the word count of the scene, topics of the scene as topical factor by a trained Latent Dirichlet Allocation, LDA, model.

The LDA model is a topic model that allows classification of documents or paragraphs in unobserved groups such that labelling of the data is not needed. A problem observed with this model when applied to scripted narratives is that the determined topics could degrade in undesired clusters. This problem was solved by the grouping of the narrative element into scenes and applying LDA model on a per scene basis. Furthermore, the word count of a scene is adapted according to word counts of neighbouring scenes. This results in a set of topics per scripted narrative that uniquely identify the content of the narrative in an objective way, i.e., such that topics of different scripted narratives can be compared or related resulting in a more accurate prediction of the level of success.

Advantageously, determining the topical factor further comprises at least one of the group of:
- removing infrequent words and stop words from the narrative elements; and
- removing names of the characters from the narrative elements; and
- merging consecutive small scenes.

This allows further reducing the risk of undesired clusters

According to an embodiment, determining the novelty factor further comprises determining a creativity factor by:
- concatenating words from the scripted narrative into bigrams; and
- calculating word counts and bigram counts; and
- determining the creativity factor from the word counts and bigram counts by a logistic regression model trained for classifying the scripted narrative in one of two groups; and wherein the groups are determined based on a financial rating and/or critical rating.

Measuring the creativity directly from a scripted narrative based on a fixed ruleset does not provide accurate results. Therefore, the creativity of a scripted narrative is classified into one of two groups. These groups are obtained by the observation that the classification of narratives according to their financial and/or critical rating results in two clusters of narratives. When a narrative belongs to the first cluster, it is typically perceived as creative while it is perceived as non-creative when it belongs to the second cluster. The first cluster comprises narratives with a high critical rating and with a high spreading in financial revenues, while the second cluster comprises narratives with a lower critical rating and with a very high financial revenue in the first period of the release but with much less revenue thereafter. It was further observed that a scripted narrative can be classified into these clusters by a logistic regression model using counts of bigrams and words as input. The probability to which of the two clusters the scripted narrative belongs is then a direct measure of how the creativity of the narrative would be perceived. It is thus an advantage that a proven objective measure of the creativity of a narrative is obtained directly from the scripted narrative.

Preferably, determining the creativity factor further comprises:
- before the calculating, removing diacritical markers and/or stop words from the scripted narrative; and /or
- after the calculating, removing infrequently occurring bigrams.

This further improves the classification into the clusters.

Preferably, the logistic regression model is obtained according to the following steps:
- obtaining for a set of narratives the financial and/or a critical rating; and
- assigning each narrative of the set to one of two statistical distributions according to the box office and/or critical rating of the narrative; and
- training the logistic regression model to classify a scripted narrative of a respective narrative of the set of narratives into the statistical distributions.

Advantageously, the assigning is further performed according to a ratio between a narrative's total box office and a narrative's box office in an initial release period.

It has been observed that this financial rating which is an indication of the short term success, is a very good indicator for assigning the narrative into one of the two clusters. When the ratio is low, a narrative is typically not creative but targets a large audience with a very high revenue in the initial release period, for example within the first week but much less revenue thereafter. A creative narrative on the other hand will not target a large audience and thus have a smaller revenue in the initial release period. However, because of the good critical rating, the narrative will generate a longer steady revenue.

The assigning may further be performed according to a production budget of the narrative and/or a number of cinemas where the narrative was shown. These parameters have also shown to be good for clustering the narratives.

According to a second aspect, the invention relates to a computer implemented method for determining a similarity between a scripted narratives and other scripted narratives or narratives comprising the following steps:
- parsing the scripted narrative further into a parsed scripted narrative comprising narrative elements and character elements; and
- calculating a vector from the parsed scripted narrative by a linear regression model trained to approximate the vector from training vectors; and wherein a training vector encodes user information for an existing narrative; and
- determining the novelty factor as a similarity between the calculated vector and vectors obtained from the other scripted narratives or narratives.

According to a third aspect, the invention relates to a computer implemented method for determining a topical factor of a scripted narrative comprising the following steps:
- parsing the scripted narrative further into a parsed scripted narrative comprising narrative elements; and
- grouping the narrative elements into scenes; and
- calculating word counts for the scenes; and
- adding to the word count of a respective scene a weighted word count from neighbouring scenes; and
- determining, for each scene, from the scene and the word count of the scene, topics of the scene as topical factor by a trained Latent Dirichlet Allocation, LDA, model;
and wherein the topical factor is indicative for a content of the scripted narrative

According to a fourth aspect, the invention relates to a computer implemented method for determining a novelty factor of a scripted narrative comprising the following steps:
- parsing the scripted narrative further into a parsed scripted narrative comprising narrative elements; and
- concatenating words from the scripted narrative into bigrams; and
- calculating word counts and bigram counts; and
- determining the novelty factor from the word counts and bigram counts by a logistic regression model trained for classifying the scripted narrative in one of two groups; and wherein the groups are determined based on a financial rating and/or critical rating.

According to a fifth aspect, the invention relates to a computer program product comprising a computer-executable instructions for performing the method according to any one of the first to fourth aspect when the program is run on a computer.

According to a sixth aspect, the invention relates to a computer readable storage medium comprising the computer program product according to the fifth aspect.

According to a seventh aspect, the invention relates to a data processing system programmed for carrying out the method according to any one of the first to fourth aspect.

### Brief Description of the Drawings

Fig. 1 illustrates steps performed for classifying a scripted narrative according to an embodiment of the invention; and
Fig. 2 illustrates a scripted narrative comprising narrative elements and character elements obtained from a scripted narrative according to an embodiment of the invention; and
Fig. 3 illustrates steps performed for determining topical, character, novelty and audience factors from a scripted narrative according to an embodiment of the invention; and
Fig. 4 illustrates steps performed for obtaining a similarity between a scripted narrative and other scripted narratives and/or narratives according to an embodiment of the invention; and
Fig. 5 illustrates steps performed for obtaining a creativity factor from a scripted narrative according to an embodiment of the invention; and
Fig. 6 illustrates steps performed for obtaining scene topics of a scripted narrative according to an embodiment of the invention; and
Fig. 7 illustrates a suitable computing system for performing steps according to various embodiments of the invention.

### Detailed Description of Embodiment(s)

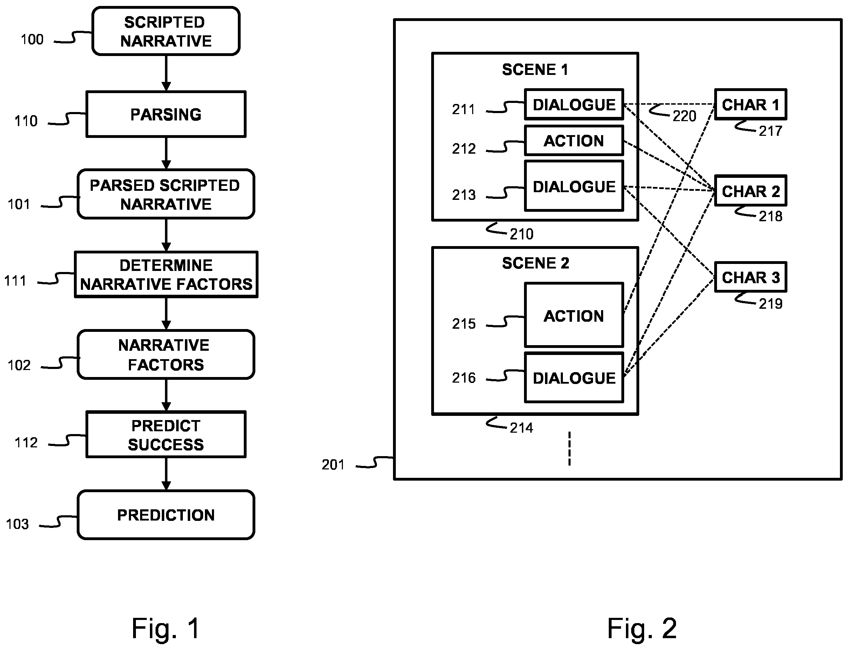

The present invention relates to the statistical classification of scripted narratives. A scripted narrative or narrative script is a written or textual form of a narrative. Next to the narrative itself, a scripted narrative comprises further elements about the narrative, e.g. scene descriptions, character directives, structural elements such as indentations, font elements and headings to indicate the structure of the narrative rather than the story. A narrative resulting from a scripted narrative may for example relate to a screenplay, a TV series or program, a theatre play, a commercial or videogames. Fig. 1 illustrates steps according to an embodiment performed for the automated classification of a scripted narrative according to a degree of expected success of the narrative. With automated it is understood that no human interaction is needed when performing the steps and that the steps may all be implemented on a computing system.

The first step 110 is the parsing of a scripted narrative 100 which is supplied in a digital or electronic format, for example as a Portable Document Format (PDF), as a plain text file or in a mark-up language such as XML. The result of the parsing step 110 is a parsed scripted narrative 101 comprising, apart from the scripted narrative itself, narrative elements and narrative characters.

Fig. 2 illustrates an example of such a parsed scripted narrative 201. First of all, the narrative is decomposed into its structural or narrative elements 210 to 216. This may be done hierarchically wherein scenes 210 and 214 represent a first level of narrative elements and wherein dialogues 211, 213, 216 and actions 212, 215 represent a second level of narrative elements. Other narrative elements may further be determined during the parsing step 110 such as for example a scene description, a paragraph, a title, acknowledgements and a synopsis. Second, the character elements 217, 218, 219 are identified from the scripted narrative 100. These character elements may further be related to the narrative elements. For example, character element 217 appears in dialogue 211 as indicated by dotted line 220. Similarly, a character element may be related to the performance of an action.

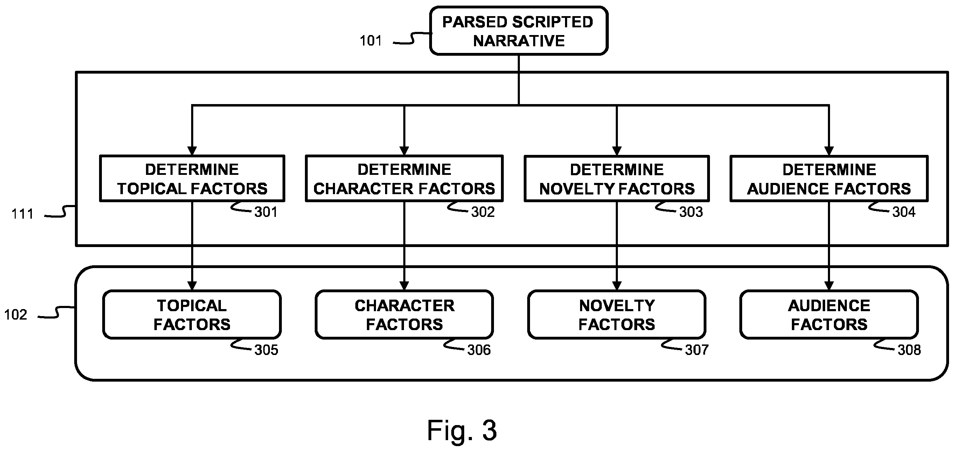

After parsing step 110, the parsed scripted narrative 101 is fed to the determining step 111 which derives the various narrative factors 102. The narrative factors comprise topical factors 305, character factors 306, novelty factors 307 and, optionally, audience factors 308 as illustrated by Fig. 3. Topical factors capture what a narrative is about, i.e., are indicative for the content of the narrative within the scripted narrative 100. The topic of a narrative is important when determining success. For example, even the best historical biographical movie will generate less in box office revenue than an average sci-fi movie. Character factors identify properties of the different characters in the narrative. The right type of characters are especially important for a successful narrative, since identification and empathy are the powerful forces that draw audiences into a story. The novelty factors are indicative for the uniqueness with respect to other narratives Even the best narrative will not achieve significant success if other narratives just like it have been released in the years prior. A successful narrative delivers its content in a novel and creative way. The audience factor further identifies the audience that will be interested in the narrative. Especially the financial success will be dependent on the type of audience. For example, an audience in the age group of 15 to 25 years will spend relatively more money than the age group of 60 to 70 years old thereby thus contributing more to the financial success. The narrative factors may further be determined according to different steps 301-304 as described in the embodiments below.

After determining the narrative factors 102 in step 111, the narrative factors 102 are then fed into a trained classifier 112 that predicts the level of success based on the narrative factors.

The different steps 110, 111, 112 and 301, 302, 303, 304 as shown in Fig. 1 and Fig. 3 will now be described in detail according to various embodiments of the invention.

### Parsing 110 of scripted narrative 100

Often a scripted narrative 100 is solely available in a format wherein the different structural elements 210-216 such as scene, paragraph, dialogue and character elements 217-219 such as character names are not yet indicated. In order to obtain the different narrative elements and character elements the following steps are performed:
- Manually annotate the narrative elements and character elements in a number of scripted narratives.
- Train a machine learning model on these annotations, using various cues such as i) typographical elements, e.g., quotes, punctuation, font weights and sizes, ii) horizontal and vertical alignment, e.g., spacing from the left margin, spacing from previous text and from the top margin, spacing between individual paragraphs, iii) numerical elements, e.g., page numbers, scene numbers, numbered headings, iv) position in the scripted narrative, e.g., first page, last page, after a certain heading such as 'Introduction' or 'Acknowledgements', v) words used, e.g., characters names, action words, length of the text of the structural element.
- Apply the machine learning model as the parsing step 110.

Advantageously, the conditional random field (CRF) model is used as machine learning model because it takes the relationship between paragraphs into account. Alternatively, a Hidden Markov Model (HMM) or recurrent neural network may be used as machine learning model. As soon as the model is properly trained, the parsing can be performed in a fully automated way without user interaction.

The advantage of the above steps are that narrative and character elements can be parsed from an unstructured scripted narrative. Although scripted narratives may have a clear indication of the start and ending of scenes, the names of the characters and the dialogue, the building of fixed rules to detect structural elements is as good as impossible due to the large variation in how the various formatting rules are applied across different scripted narratives.

### Determining 301 topical factors 305 from parsed scripted narrative 101

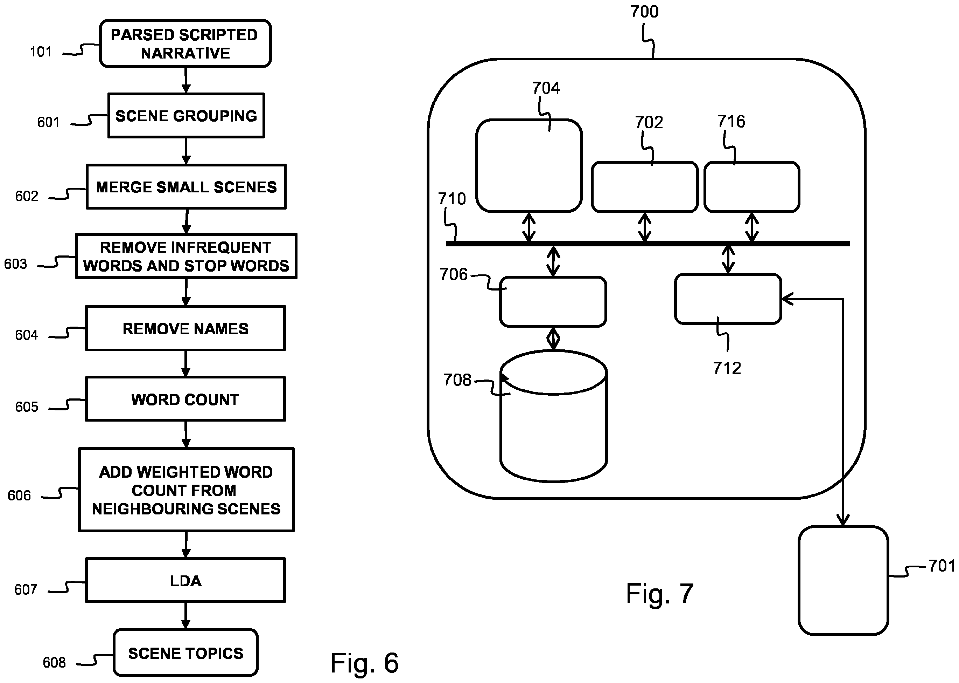

Fig. 6 illustrates steps performed for deriving scene topics 608 as topical factors from the parsed scripted narrative 101. In a first step 601, the scripted narrative is grouped into scenes wherein each such scene is treated as a separate document. This grouping is done based on the narrative elements identified in the scripted narrative 101. A single scene often contains a single important event corresponding to a single topical factor. In the next step 602, small scenes are merged into bigger scenes, for example by merging a scene with less words than a certain threshold with the next or previous scene. In the next step 603, infrequent words are removed, e.g., based on the number occurrences, and stop words are removed, e.g., based on a predetermined list of stop words. Next, in step 604, character names are removed from the scenes from example based on the identification of the character elements in the parsed scripted narrative. Next, in step 605 word counts are calculated for every scene, i.e., the number of appearances of a certain word in a scene. Then, in a following step 606, the word counts are weighted with word counts from neighbouring scenes. For example, the word counts of the previous and next scene are added according to a 0.3 multiplication factor thereby giving 30% weight to the next and previous scene.

Finally, in the last step 607, the word counts are fed into a trained Latent Dirichlet Allocation (LDA) model which derives scene topics from each scene, for example by assigning probabilities for scene topics to each scene. This model can be trained on a large collection of documents. After training the model will have learned a number of topics in an unsupervised way together with what words occur frequently in what topic. This way, no manual labelling of the data is required.

Alternatively or additionally the topical factor may be derived from a fixed set of genres such as for example "drama", "comedy" and "fantasy" for film scripts. As no new topical factors are derived in comparison with the LDA model, this method may be used for classifying narratives that are already in use for a long time. To determine these genres for a scripted narrative automatically, the following steps are performed:
- Extracting all the words from the narrative.
- Removing the character names from this list of words.
- Removing all diacritical marks from the letters of all words.
- Removing stop words, i.e., words that occur very frequently in a corpus such as 'the', 'a', 'and'..., and infrequent words.
- Derive the genres by a trained machine learning module such as for example a logistic regression model, support vector machines, kernel methods, decision trees, random forest classifiers, neural networks, naive Bayes classifiers or any combination of these classifiers. The classifier then assigns for every combination of scripted narrative and genre a probability of assigning that genre to that narrative.

### Determining 303 novelty factors 307 as similarity with other narratives

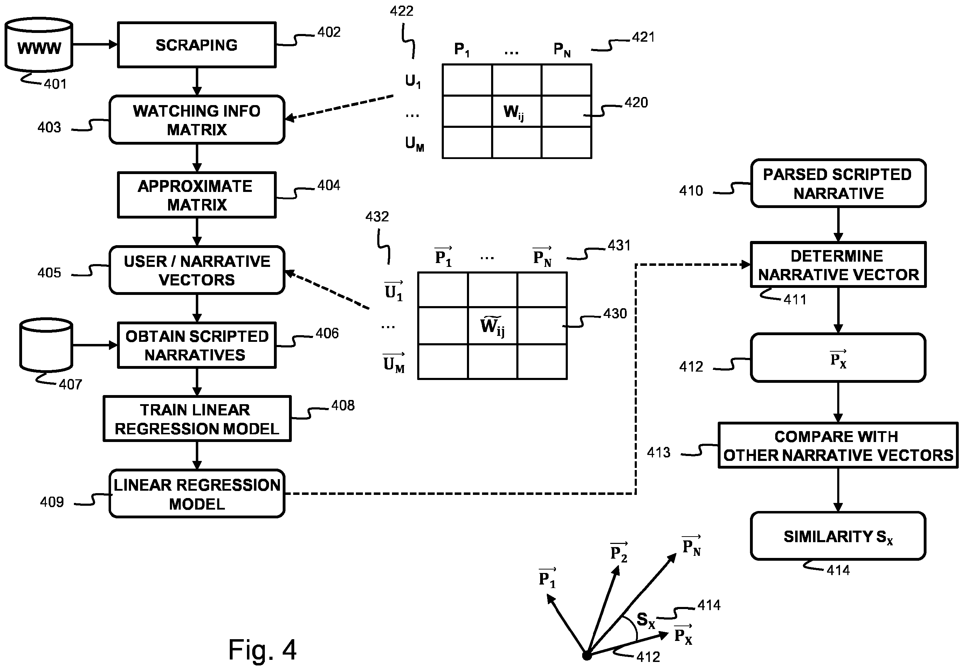

Fig. 4 illustrates steps performed for determining a similarity of a scripted narrative 100 with other narratives and/or other scripted narratives. A first set of steps 402-408 is performed for training a linear regression model 409 which can be done offline as a one-time training step. A second set of steps 410-414 is performed for calculating an objective measure of the similarity 414 between the scripted narrative 100 and a store of other previously released narratives or other scripted narratives.

In a first scraping step 402 watching information 403 is obtained for a first set of narratives. Watching information relates a set of users (watchers) of the narratives which they have or haven't watched. Such information may for example be obtained from Internet services 401 such as IMDb containing a large collection of movies together with a large subscriber base linking each subscriber to the movies they have watched. The watching information is then represented in a matrix with an identification of the different users along the rows 422 and an identification of the movies (narratives) along the columns 421. Every entry 420 in the matrix then indicates whether a user has watched a respective movie or not.

Then, in a next step 404, the watching information 403 is approximated by a set of user vectors 432 and narrative vectors 431. The vectors are determined such that a an inner product of a user vector and a narrative vector results in an approximated value 430 of the watching information 420. The approximated value will then represent the probability 430 that a certain user 432 has watched a certain narrative 431. Then, in a next step 406, scripted narratives 407 are obtained for all or a subset of the narratives 421/431. This set of scripted narratives is then used to train a linear regression model to approximate the narrative vectors 431 from the corresponding scripted narrative. In other words, the linear regression model allows approximating a representation of a typical audience of a narrative from the scripted narrative

The linear regression model 409 is then used during step 411 to estimate a narrative vector 412 from a parsed scripted narrative. This narrative vector 412 is then compared in step 413 with other narrative vectors in order to obtain a similarity 414 of the scripted narrative with a set of other narratives. The other narratives may for example correspond to stored narrative vectors 431 derived from watching information 403 and/or to stored narrative vectors obtained from other previously processed scripted narratives.

### Determining 303 novelty factors 307 as a creativity factor

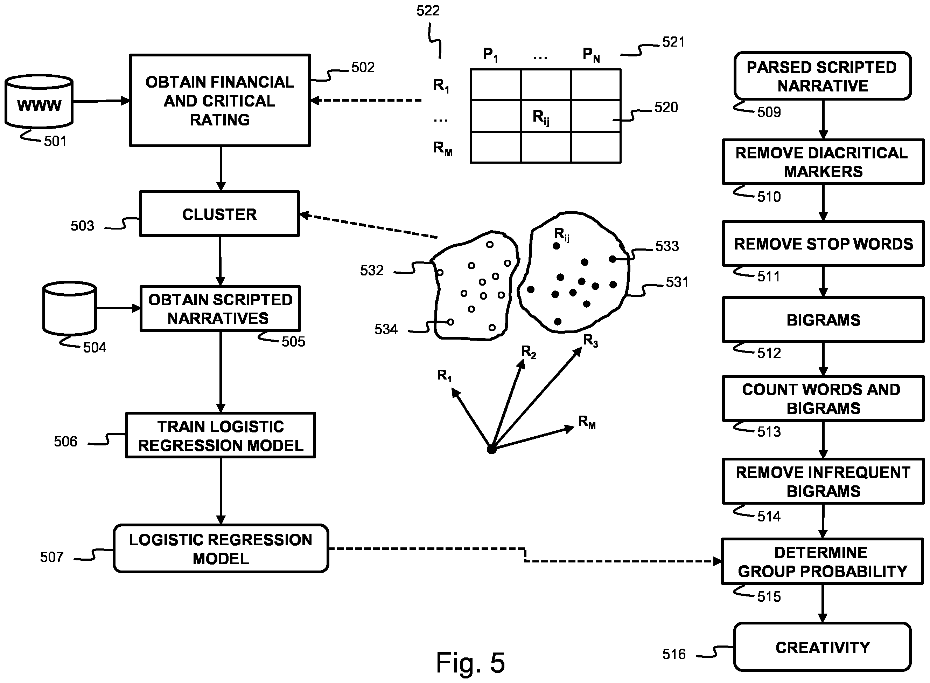

Fig. 5 illustrates steps performed according to an embodiment of the invention for determining a creativity factor 516 from a scripted narrative as a novelty factor. The creativity factor may further be determined together with the similarity factor in order to predict the success of the scripted narrative. A first step of steps 502 to 507 may be performed as a one-time offline procedure for training logistic regression model 507. This model 507 is then used in the procedure 510 to 515 to determine the creativity factor 516 of a parsed scripted narrative 509.

In a first step 502, financial and/or critical rating information is obtained for a first set of narratives. This information may for example be obtained from Internet services 501. The set of narratives 521 is then labelled with the financial and/or critical rating information 522. By this labelling a measure 520 of the creativity of the narratives is added to the narratives. A preferred financial information measure is a metric referred to as 'leg'. This metric is indicative for the ability of the narrative to attract audiences throughout its release. The 'leg' of a narrative is computed by the ratio between the total financial success of the narrative and the financial success in a first initial period during the release. A film with a small leg will correspond with a film that has been widely released and has a large marketing budget but fails to attract audiences after the initial opening weekend. A film with a large leg is typically developed by a smaller studio, deals with unexplored topics, uses a novel story structure and deals with unexplored topics. Due to the limited release and marketing budget, the initial financial success will be low. If such a film receives positive reviews or word of mouth in the first weeks, it will receive a wider release and, thus, a smaller leg. The leg is therefore indicative for the creativity of the narrative. Other financial and critical information that may be used is for example the total box office in a certain country, region or internationally, the production budget, the number of cinemas it has been played in, and critical scores such as scores obtained from http://www.metacritic.com/ or http://www.imdb.com.

Then, in a next step 503, the labelled narratives are clustered into one of two groups 531, 532 by a Gaussian Mixture Model. This model will cluster the narratives 533, 534 as a mixture of two Gaussian distributions. All narratives belonging to the first distribution are then labelled as creative while those belonging to the second cluster are labelled not-creative.

In a next step 506 a set of scripted narratives for the narratives obtained in step 502 is obtained and, in the next step 506, a logistic regression model is trained to classify a scripted narrative into one of the two Gaussian distributions. Before the training step 506, the scripted narrative is first parsed into a parsed scripted narrative and further processed into bigrams as will be described with reference to steps 510 to 514.

The logistic regression model 507 is then used to determine the creativity of a parsed scripted narrative 509. First, some pre-processing step are performed on the scripted narrative:
- Removing 510 of diacritical markers.
- Removing 511 of stop words.
- Grouping 512 the words into bigrams.
- Calculating 513 the word counts and bigram counts, i.e., the number of occurrences of the words and bigrams.
- Removing 514 of infrequently occurring bigrams.

The pre-processed scripted narrative is then fed into the trained logistic regression model 507 which determines in step 515 a probability of the Gaussian distribution 531, 532 to which the narrative belongs. This probability corresponds to a measure of the creativity 516 of the scripted narrative and therefore the novelty factor.

### Determining 302 character factors 306 from a scripted narrative 100

Character factors analyse the different characters in the narrative. The correct type of characters are especially important for a successful narrative, since identification and empathy with a character may contribute to the success of the narrative.

Character factors may comprise a sociability of a main character in the narrative. The sociability of a character is a measure of how much the character interacts with other characters in the narrative. According to an embodiment, the sociability of the main character is automatically calculated by performing the following steps:
- Obtain the main character from the parsed scripted narrative 101, for example by determining the character that is most named in the scripted narrative.
- Count the number of scenes in which the main character occurs together with at least one other character.
- Divide this number through the total number of scenes in which the main character occurs thereby obtaining an objective measure of the sociability of the main character.

Character factors may further comprise character sentiment, i.e., a measure of the emotional state of one or more characters within the narrative. According to an embodiment of the invention, character sentiment of a scripted narrative is determined as follows:
- Define a set of sentiments comprising for example love, attraction, pride, jealousy and disdain.
- Train a classifier to assign a probability for each sentiment and for each character in each paragraph of the scripted narrative from a set of labelled scripted narratives. The classifier may for example correspond to a logistic regression classifier, a support vector machine, a kernel method, a decision tree, a random forest classifier, a naïve Bayes classifier or any combination thereof.
- Determine the probabilistic assignment for the different sentiments for each paragraph by the trained classifier.
- Count the number of paragraphs in which the probability of the sentiment is above a certain cut-off, e.g., a value between 0.75 and 0.95. This count for each sentiment may then be used as character factor.

The classifier may use a number of features to determine the sentiments such as for example the words that occur in the paragraph, the words that occur in the previous paragraph, the words that occur in all previous paragraphs, the words that occur in the scene, the type of the paragraph (action, dialogue, parenthetical), the length of the paragraph, the number and type of the pronouns in the paragraph, whether the paragraph contains negation, whether the paragraph contains profanity and whether the paragraph contains repeated letter sequences (e.g. "grrrrrr"), a word distance for every word to a word expressing the respective sentiment.

### Determining 304 audience factors 308 from a scripted narrative 100

The audience factors provide information on the audience for the narrative. According to an embodiment of the invention the audience factors comprise age groups to which the narrative will appeal. These age groups may be estimated by performing the following steps:
- Obtain the appeal of a narrative from a large database of narratives that contain for every narrative the age of all audience members that viewed this narrative. Such information may example be obtained from internet services such as provided by http://www.imdb.com.
- Calculate for every narrative a relative fraction of every age group thereby obtaining a training set of narratives together with a relative popularity of the narrative in the different age groups.
- Obtain the scripted narratives for every narrative.
- Pre-process each scripted narrative by removing any diacritical markers and removing all stop words.
- Concatenate the remaining words in pairs or bigrams.
- Calculate the word counts and bigram counts, i.e., the amount of times a word and bigram occurs in the scripted narrative.
- Filter all bigrams that occur infrequently.
- Train a classifier to predict the age group from these word and bigram counts based on the obtained labels. The classifier may correspond to a logistic regression classifier, a support vector machine, a kernel method, a decision tree, a random forest classifier, a naïve Bayes classifier or any combination thereof.
- Use the trained classifier to predict the relative fraction as the audience factor for a parsed scripted narrative.

Alternatively or additionally other audience factors may be determined in a similar fashion such as for example a rating of the narrative according to the Motion Picture Association of America (MPAA) or a gender of the audience.

### Determining 112 an amount of success from the narrative factors 102

In the last step 112 of Fig. 1, the success is predicted from the narrative factors that are determined according to one or more of the above embodiments. In order to do so, the success is defined according to a numerical value with a specific meaning. A commercial success may for example be defined as a number of copies sold, a number of tickets sold, a generated box office for screenplays, a television viewer counting or generated advertisement revenue for television programs. In a same way, a critical success may for example be defined as a number of awards or an average review rating. The success metric may further be defined according to any combination of critical and/or commercial successes.

In order to predict the success metric, a statistical classifier is trained by performing the following steps:
- Obtain a large training set of narratives that have been published in the past.
- For every narrative, obtain and/or calculate the success metric that is to be predicted.
- For every narrative, obtain the scripted narrative.
- Parse the scripted narrative according to step 110 and determine the narrative factors according to step 111.
- Train the classifier to predict the success metric of the training set from the narrative factors.

The last step is a machine learning problem for which a large number of different machine learning techniques may be used. One preferred technique is the linear regression method wherein an automated algorithm, e.g., the ordinary least squares method, learns a weight for every narrative factor. These weights are then positive for characteristics that have a positive correlation with the success metric, e.g., the creativity factor, and negative for factors that have a negative correlation with the success metric, e.g., the similarity to a previously published narrative). The absolute magnitude of the weight expresses the importance of a certain narrative factor on the success of the narrative. To predict the success of a new scripted narrative, the trained classifier then determines a prediction of the success metric.

Fig. 7 shows a suitable computing system for performing the steps according the various above embodiments. Computing system 700 may in general be formed as a suitable general purpose computer and comprise a bus 710, a processor 702, a local memory 704, one or more optional output interfaces 716, a communication interface 712, a storage element interface 706 and one or more storage elements 708. Bus 710 may comprise one or more conductors that permit communication among the components of the computing system 700. Processor 702 may include any type of conventional processor or microprocessor that interprets and executes programming instructions. Local memory 704 may include a random access memory (RAM) or another type of dynamic storage device that stores information and instructions for execution by processor 702 and/or a read only memory (ROM) or another type of static storage device that stores static information and instructions for use by processor 702. Storage element interface 706 may comprise a storage interface such as for example a Serial Advanced Technology Attachment (SATA) interface or a Small Computer System Interface (SCSI) for connecting bus 710 to one or more storage elements 708, such as one or more local disks, for example SATA disk drives, and control the reading and writing of data to and/or from these storage elements 708. Although the storage elements 708 above is described as a local disk, in general any other suitable computer-readable media such as a solid state drive or flash memory cards could be used. The system 700 described above can also run as a Virtual Machine above the physical hardware. The steps performed according to the above embodiments may be partly or completely implemented as programming instructions to be run on processor 702. Communication interface 712 may allow communication with a remote computing system 701 over a wired or wireless network. Remote computing system 701 may be located within a local area network (LAN) or wide area network (WAN) and be reachable over the Internet.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer implemented method for automated classification of a scripted narrative (100) comprising the following steps:
- parsing (110) the scripted narrative further into a parsed scripted narrative (101) comprising narrative elements (210-214) and character elements (217-219); and
- from the parsed scripted narrative, determining (301-304) narrative factors (102) comprising:
o a topical factor (305) indicative for a content of the scripted narrative; and
o a character factor (306) indicative for a property of a character in the scripted narrative; and
o a novelty factor (307) indicative for a uniqueness with respect to other scripted narratives; and
- by a trained classifier, predict (112) a level of success (103) of the scripted narrative (100) based on the narrative factors (102).

2. The method according to claim 1 wherein the determining the novelty factor further comprises:
- calculating (411) a vector (412) from the parsed scripted narrative (410) by a linear regression model (409) trained to approximate the vector from training vectors; and wherein a training vector encodes user information for an existing narrative; and
- determining (413) the novelty factor as a similarity between the calculated vector (412) and one or more other vectors (431).

3. The method according to claim 2 wherein the determining (303) the novelty factor further comprises determining the linear regression model according to the following steps:
- obtaining (402) a training set comprising a set of users (422), a set of narratives (421) and watching information (420) indicative for whether a respective user from the set of users has watched a respective narrative from the set of narratives; and
- approximating (404) the watching information by determining a set of user vectors (432) for the set of users and a set of narrative vectors (431) for the set of narratives such that approximated watching information (430) is derivable from the set of narrative vectors (431) and the set of user vectors (432); and
- obtain (406) a subset of scripted narratives (407) for a subset of the set of narratives; and
- training (408) the linear regression model (409) to determine the narrative vectors (431) of the subset of narratives from the subset of scripted narratives.

4. The method according to any one of the preceding claims wherein the determining the topical factor further comprises:
- grouping (601) the narrative elements into scenes (210, 214); and
- calculating (605) word counts for the scenes; and
- adding (606) to the word count of a respective scene a weighted word count from neighbouring scenes; and
- determining (607), for each scene, from the scene and the word count of the scene, topics of the scene (608) as topical factor by a trained Latent Dirichlet Allocation, LDA, model.

5. The method according to claim 4 wherein the determining the topical factor further comprises at least one of the group of:
- removing (603) infrequent words and stop words from the narrative elements; and
- removing (604) names of the characters from the narrative elements; and
- merging (602) consecutive small scenes.

6. The method according to any one of the preceding claims wherein the determining the novelty factor further comprises determining a creativity factor (516) by:
- concatenating (512) words from the scripted narrative into bigrams; and
- calculating (513) word counts and bigram counts; and
- determining (515) the creativity factor from the word counts and bigram counts by a logistic regression model (507) trained for classifying (515) the scripted narrative in one of two groups (531, 532); and wherein the groups are determined based on a financial rating and/or critical rating (522).

7. The method according to claim 6 wherein the determining the creativity factor further comprises:
- before the calculating (513), removing diacritical markers (510) and/or stop words (511) from the scripted narrative; and /or
- after the calculating (513), removing (514) infrequently occurring bigrams.

8. The method according to claim 6 or 7 wherein the determining a creativity factor further comprises determining the logistic regression model according to the following steps:
- obtaining (502) for a set of narratives (521) a box office and/or a critical rating (522); and
- assigning (503) each narrative of the set to one of two statistical distributions (531, 532) according to the box office and/or critical rating (522) of the narrative; and
- training (506) the logistic regression model to classify a scripted narrative of a respective narrative of the set of narratives into the statistical distributions.

9. The method according to claim 8 wherein the assigning is further performed according to a ratio between a narrative's total box office and a narrative's box office in an initial release period.

10. The method according to claim 8 or 9 wherein the assigning is further performed according to a production budget of the narrative and/or a number of cinemas where the narrative was shown.

11. A computer program product comprising a computer-executable instructions for performing the method according to any one of the preceding claims when the program is run on a computer (700).

12. A computer readable storage medium comprising the computer program product according to claim 11.

13. A data processing system (700) programmed for carrying out the method according to any one of the preceding claims.
